(19) Europäisches Patentamt
European Patent Office
Office européen des brevets

(11) **EP 4 475 284 A1**

(12) **EUROPEAN PATENT APPLICATION**

(43) Date of publication:
**11.12.2024 Bulletin 2024/50**

(21) Application number: **24162233.1**

(22) Date of filing: **08.03.2024**

(51) International Patent Classification (IPC):
*H01M 50/103* (2021.01)     *H01M 50/15* (2021.01)
*H01M 50/176* (2021.01)

(52) Cooperative Patent Classification (CPC):
**H01M 50/15; H01M 50/103; H01M 50/176**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023   CN 202321413171 U**

(71) Applicant: **Xiamen Hithium Energy Storage Technology Co., Ltd.**
**Xiamen, Fujian 361100 (CN)**

(72) Inventors:
• **CHEN, Weixin**
  **Xiamen, Fijian, 361100 (CN)**
• **XU, Weidong**
  **Xiamen, Fujian, 361100 (CN)**

(74) Representative: **Manitz Finsterwald**
**Patent- und Rechtsanwaltspartnerschaft mbB**
**Martin-Greif-Strasse 1**
**80336 München (DE)**

(54) **END COVER ASSEMBLY, BATTERY CELL, BATTERY MODULE, AND ENERGY STORAGE DEVICE**

(57)     Provided are an end cover assembly, a battery cell, a battery module, and an energy storage device. The end cover assembly includes a cover plate, an explosion-proof valve, a first electrode terminal, and a second electrode terminal. The cover plate has a first protrusion, at least one second protrusion, and at least one third protrusion. The first protrusion has a mounting hole, and the at least one second protrusion and the at least one third protrusion are arranged at two opposite sides of the first protrusion in a length direction of the cover plate, respectively. The explosion-proof valve is mounted in the mounting hole. The first electrode terminal and the second electrode terminal are arranged on the cover plate and spaced apart from each other. In the length direction of the cover plate, one of the at least one second protrusion is closer to the first electrode terminal than the first protrusion, and one of the at least one third protrusion is closer to the second electrode terminal than the first protrusion. With the above-mentioned end cover assembly, these protrusions can significantly reinforce strength of the cover plate without increasing a thickness of the entire cover plate, which can reduce costs and increase an energy density.

EP 4 475 284 A1

**Description**

**FIELD**

The present disclosure relates to the field of battery technologies, and more particularly, to an end cover assembly, a battery cell, a battery module, and an energy storage device.

**BACKGROUND**

Currently, a trend of an energy storage battery is to develop towards a single cell with a large capacity, and a size of the battery is also relatively increased. Since an ultra-large cell is large in size, strength of a top cover is required to be high. Increasing a thickness of an entire cover plate can improve the strength of the top cover, but leads to a large increase in costs.

**SUMMARY**

Embodiments of the present disclosure provide an end cover assembly, a battery cell, a battery module, and an energy storage device to solve at least one of the above existing technical problems.

According to an embodiment of the present disclosure, an end cover assembly includes a cover plate, an explosion-proof valve, a first electrode terminal, and a second electrode terminal. The cover plate has a first protrusion, at least one second protrusion, and at least one third protrusion. The first protrusion has a mounting hole. The at least one second protrusion and the at least one third protrusion are arranged at two opposite sides of the first protrusion in a length direction of the cover plate, respectively. The explosion-proof valve is mounted in the mounting hole. The first electrode terminal and the second electrode terminal are arranged at the cover plate and spaced apart from each other. In the length direction of the cover plate, one of the at least one second protrusion is closer to the first electrode terminal than the first protrusion, and one of the at least one third protrusion is closer to the second electrode terminal than the first protrusion.

With the above-mentioned end cover assembly, the first protrusion, the at least one second protrusion, and the at least one third protrusion are provided on the cover plate. The at least one second protrusion and the at least one third protrusion are arranged at the two opposite sides of the first protrusion in the length direction of the cover plate, respectively. These protrusions can significantly reinforce strength of the cover plate without increasing a thickness of the entire cover plate, which can reduce costs and increase an energy density.

In some embodiments, the first protrusion, the at least one second protrusion, and the at least one third protrusion are formed on the cover plate through a stamping process.

In this way, the costs of the cover plate are further reduced.

In some embodiments, the first electrode terminal, the at least one second protrusion, the first protrusion, the at least one third protrusion, and the second electrode terminal are arranged sequentially in the length direction of the cover plate; or the at least one second protrusion, the first electrode terminal, the first protrusion, the second electrode terminal, and the at least one third protrusion are arranged sequentially in the length direction of the cover plate; or the at least one second protrusion, the first electrode terminal, the first protrusion, the at least one third protrusion, and the second electrode terminal are arranged sequentially in the length direction of the cover plate; or the first electrode terminal, the at least one second protrusion, the first protrusion, the second electrode terminal, and the at least one third protrusion are arranged sequentially in the length direction of the cover plate.

In this way, several arrangements of components on the cover plate can be realized.

In some embodiments, the at least one second protrusion is spaced apart from the first electrode terminal by a predetermined distance. The at least one third protrusion is spaced apart from the second electrode terminal by a predetermined distance.

In this way, a size of the cover plate can be increased.

In some embodiments, the end cover assembly satisfies at least one of the following relationships:

$$0.05 \leq L2/L1 \leq 0.3;$$

$$0.05 \leq L5/L1 \leq 0.3;$$

$$0.1 \leq L3/L1 \leq 0.3;$$

and

$$0.5 \leq L4/L3 \leq 0.9 \text{ and } 5 \text{ mm} \leq L4\text{-}L3 \leq 20 \text{ mm},$$

where L1 represents a length of the cover plate, L2 represents a length of each of the at least one second protrusion, L3 represents a length of the first protrusion, L4 represents a length of the explosion-proof valve, L5 represents a length of each of the at least one third protrusion, and each of a length direction of the first protrusion, a length direction of the second protrusion, and a length direction of the third protrusion is parallel to the length direction of the cover plate.

In this way, an effect of reinforcing the strength of the cover plate and a reduced occupation of a space of other components such as a liquid injection hole and the explosion-proof valve can be ensured. An area of the explosion-proof valve and a reduced occupation of a space of other components such as the liquid injection hole can be ensured. An effect of reinforcing strength at the explosion-proof valve and a welding quality of the explosion-proof valve can be ensured.

In some embodiments, the end cover assembly satisfies at least one of the following relationships:

$$0.2 \leq W2/W1 \leq 0.9;$$

$$0.2 \leq W5/W1 \leq 0.9;$$

$$0.4 \leq W3/W1 \leq 0.9;$$

and

$$0.5 \leq W4/W3 \leq 0.9 \text{ and } 5 \text{ mm} \leq W3\text{-}W4 \leq 20 \text{ mm},$$

where W1 represents a width of the cover plate, W2 represents a width of each of the at least one second protrusion, W3 represents a width of the first protrusion, W4 represents a width of the explosion-proof valve, W5 represents a width of each of the at least one third protrusion, and each of a width direction of the first protrusion, a width direction of the second protrusion, and a width direction of the third protrusion is parallel to a width direction of the cover plate.

In this way, the effect of reinforcing the strength of the cover plate and a welding quality of the cover plate can be ensured. The area of the explosion-proof valve and the welding quality of the cover plate can be ensured. The effect of reinforcing the strength at the explosion-proof valve and the welding quality of the explosion-proof valve can be ensured.

In some embodiments, the end cover assembly satisfies at least one of the following relationships:

$$0.2 \leq H2/H1 \leq 1 \text{ and } 0.5 \text{ mm} \leq H2 \leq 3 \text{ mm};$$

$$0.2 \leq H3/H1 \leq 1 \text{ and } 0.5 \text{ mm} \leq H3 \leq 3 \text{ mm};$$

and

$$0.2 \leq H4/H1 \leq 1 \text{ and } 0.5 \text{ mm} \leq H4 \leq 3 \text{ mm},$$

where H1 represents a thickness of the cover plate, H2 represents a height by which each of the at least one second protrusion protrudes from the cover plate, H3 represents a height by which the first protrusion protrudes from the cover plate, and H4 represents a height by which each of the at least one third protrusion protrudes from the cover plate.

In this way, the effect of reinforcing the strength of the cover plate and a reduced occupation of a module space can be ensured.

According to an embodiment of the present disclosure, a battery cell includes the end cover assembly of any of the above-mentioned embodiments.

According to an embodiment of the present disclosure, a battery module includes the battery cell of the above-mentioned embodiment.

In some embodiments, the battery module includes a plurality of battery cells arranged side by side. Two first electrode terminals or two second electrode terminals of two adjacent battery cells of the plurality of battery cells are electrically connected to each other by a connection sheet. One of the at least one second protrusion or one of the at least one third protrusion of each of the plurality of battery cells is electrically connected to a connection sheet close to the one second protrusion or the one third protrusion by a sampling connector.

In this way, the second protrusion can be used as a sampling protrusion to reduce the costs.

According to an embodiment of the present disclosure, an energy storage device includes the battery cell of the above-mentioned embodiment or the battery module of any of the above-mentioned embodiments.

With the above-mentioned battery cell, battery module, and energy storage device, the first protrusion, the at least one second protrusion, and the at least one third protrusion are provided on the cover plate. The at least one second protrusion and the at least one third protrusion are arranged at two opposite sides of the first protrusion in the length direction of the cover plate, respectively. These protrusions can significantly reinforce the strength of the cover plate without increasing the thickness of the entire cover plate, which can reduce costs and increase an energy density.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

In order to clearly explain technical solutions of embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.

FIG. 1 is an isometric view of an end cover assembly according to an embodiment of the present disclosure.
FIG. 2 is an exploded view of an end cover assembly according to an embodiment of the present disclosure.
FIG. 3 to FIG. 6 each are a schematic view of a distribution of members on a cover plate according to an embodiment of the present disclosure.
FIG. 7 is a top view of a cover plate according to an embodiment of the present disclosure.
FIG. 8 is a partial sectional view of the cover plate in FIG. 7 taken along line A-A.
FIG. 9 is an isometric view of a battery cell according to an embodiment of the present disclosure.
FIG. 10 is an exploded view of a battery cell according to an embodiment of the present disclosure.
FIG. 11 is a schematic view of a battery module according to an embodiment of the present disclosure.

Explanation of reference numerals of the accompanying drawings:
100, end cover assembly; 12, cover plate; 14, explosion-proof valve; 16, first electrode terminal; 17, second electrode terminal; 18, first protrusion; 20, second protrusion; 21, third protrusion; 22, mounting hole; 23, liquid injection hole; 24, metallic portion; 26, connection portion; 28, insulation portion; 30, sealing ring; 32, lower plastic member; 34, connection plate; 36, through hole; 38, connection sheet; 40, sampling connector; 42, housing; 44, bare cell; 46, accommodation chamber; 48, opening; 200, battery cell; 300, battery module.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the description of the present disclosure, it should be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", and "anticlockwise", etc. is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means two or more than two, unless otherwise specifically defined.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through other features between the first and second features. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

A number of embodiments or examples are provided below to implement different structures of the present disclosure. To simplify the disclosure of the present disclosure, components and arrangements of particular examples will be described below, which are, of course, examples only and are not intended to limit the present disclosure. Furthermore, reference numerals and/or reference letters may be repeated in different examples of the present disclosure. Such repetition is for the purpose of simplicity and clarity and does not indicate any relationship between various embodiments and/or arrangements in question. In addition, various examples of specific processes and materials are provided in the present disclosure. However, those of ordinary skill in the art may be aware of applications of other processes and/or the use of other materials.

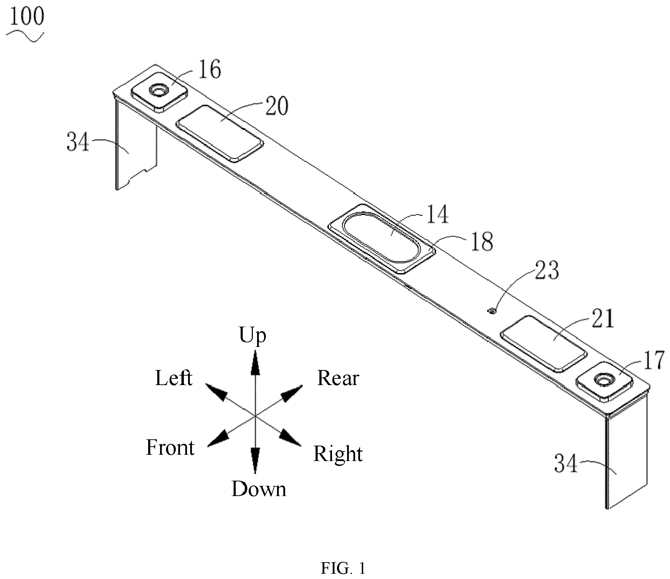

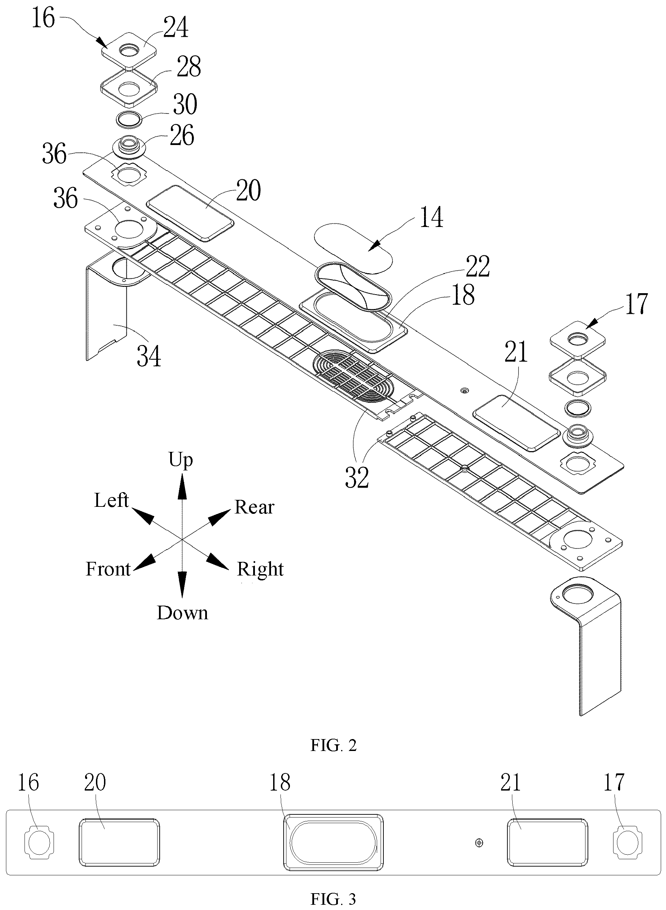

As illustrated in FIG. 1 and FIG. 2, embodiments of the present disclosure provide an end cover assembly 100. The end cover assembly 100 includes a cover plate 12, an explosion-proof valve 14, a first electrode terminal 16, and a second electrode terminal 17.

The cover plate 12 has a first protrusion 18, at least one second protrusion 20, and at least one third protrusion 21. The first protrusion 18 has a mounting hole 22. The at least one second protrusion 20 and the at least one third protrusion 21 are arranged at two opposite sides of the first protrusion 18 in a length direction of the cover plate 12, respectively. The explosion-proof valve 14 is mounted in the mounting hole 22. The first electrode terminal 16 and the second electrode terminal 17 are arranged on the cover plate 12 and spaced apart from each other. In the length direction of the cover plate 12, one of the at least one second protrusion 20 is closer to the first electrode terminal 16 than the first protrusion 18, and one of the at least one third protrusion 21 is closer to the second electrode terminal 17 than the first protrusion 18.

With the above-mentioned end cover assembly 100, the first protrusion 18, the at least one second protrusion 20, and the at least one third protrusion 21 are arranged on the cover plate 12. The at least one second protrusion 20 and the at least one third protrusion 21 are arranged at the two opposite sides of the first protrusion 18 in the length direction of the cover plate 12, respectively. Similar to a reinforcing rib, each of the protrusions can significantly reinforce strength of the cover plate 12 without increasing a thickness of the entire cover plate 12, which can reduce costs and increase an energy density.

Further, when a battery cell 200 has a large size, the required end cover assembly 100 also has a large size, and the explosion-proof valve 14 corresponding to the end cover assembly 100 also has a large size. The explosion-proof valve 14 is mounted at the mounting hole 22 of the first protrusion 18, which alleviates a problem of a reduction of the strength of the cover plate 12 due to a large mounting hole 22 of the explosion-proof valve 14. The cover plate 12 further has a liquid injection hole 23. The liquid injection hole 23 is configured to allow for an injection of an electrolyte solution into the battery cell 200.

In some embodiments, a material of the cover plate 12 is not specifically limited in the present disclosure. In an embodiment, the cover plate 12 may be a polished aluminum sheet.

As illustrated in FIG. 1, the length direction of the cover plate 12 is a left-right direction. A width direction of the cover plate 12 is a front-rear direction. The cover plate 12 is provided with three protrusions, which are respectively one first protrusion 18, one second protrusion 20, and one third protrusion 21. The first protrusion 18 is located in a middle of the cover plate 12. The second protrusion 20 and the third protrusion 21 are arranged at two opposite sides (left and right sides illustrated in FIG. 1) of the first protrusion 18 in the length direction of the cover plate 12, respectively. The first electrode terminal 16 and the second electrode terminal 17 are arranged on the cover plate 12. In the length direction of the cover plate 12, the second protrusion 20 is arranged closer to the first electrode terminal 16 than the first protrusion 18, and the third protrusion 21 is arranged closer to the second electrode terminal 17 than the first protrusion 18.

It should be understood that, in other embodiments, the number of protrusions arranged on the cover plate 12 is not limited to three, and may also be four or more. That is, in the present disclosure, $n$ protrusions are provided on the cover plate 12, where $n \geqq 3$. In an embodiment, n=5. In some embodiments, the first protrusion 18 may be located in the middle of the cover plate 12. The mounting hole 22 of the explosion-proof valve 14 is defined at the first protrusion 18. Two second protrusions 20 are arranged at a left side of the first protrusion 18. Two third protrusions 21 are arranged at a right side of the first protrusion 18. In the length direction of the cover plate 12, one of the two second protrusions 20 may be arranged closer to the first electrode terminal 16 than the first protrusion 18, and one of the two third protrusions 21 may be arranged closer to the second electrode terminal 17 than the first protrusion 18.

One of the first electrode terminal 16 and the second electrode terminal 17 may serve as a positive terminal, and the other one of the first electrode terminal 16 and the second electrode terminal 17 may serve as a negative terminal. As illustrated in FIG. 2, each electrode terminal may include a metallic portion 24, a connection portion 26, an insulation portion 28, and a sealing ring 30. The end cover assembly 100 further includes a lower plastic member 32 and a connection plate 34. The lower plastic member 32 is located below the cover plate 12. The end cover assembly 100 has a through hole 36 penetrating the cover plate 12 and the lower plastic member 32. The connection portion 26 passes through the through hole 36. An upper end of the connection portion 26 is connected to the metallic portion 24. A lower end of the connection portion 26 is connected to the connection plate 34. The metallic portion 24 is mounted in the insulation portion 28 to separate the metallic portion 24 from the cover plate 12. The sealing ring 30 seals a gap between the connection portion 26 and the through hole 36. The connection plate 34 is configured to be electrically connected to a tab of a bare cell 44.

In some embodiments, each of the first protrusion 18, the second protrusion 20, and the third protrusion 21 is formed on the cover plate 12 through a stamping process.

In this way, the costs of the cover plate 12 can be further reduced.

In some embodiments, when manufacturing the cover plate 12, a stamping mold may be designed. A plate with equal thickness may be stamped by a stamping device equipped with the stamping mold. The cover plate 12 with the protrusion may be obtained by blanking. Compared with a method in which a protrusion is directly formed on a surface of the cover plate 12, the method in which the protrusion is formed through the stamping process allows a part of the cover plate 12 at the other side corresponding to the protrusion to be formed as a recess, which can reduce a weight of the cover plate 12, further reducing the cost of the cover plate 12.

In some embodiments, as illustrated in FIG. 3, the first electrode terminal 16, the second protrusion 20, the first protrusion 18, the third protrusion 21, and the second electrode terminal 17 are arranged sequentially in the length direction of the cover plate 12.

In this way, one arrangement of the components on the cover plate 12 can be realized.

In some embodiments, the first protrusion 18, the second protrusion 20, and the third protrusion 21 are located between the first electrode terminal 16 and the second electrode terminal 17 in the length direction of the cover plate 12. The second protrusion 20 is arranged close to the first electrode terminal 16. The third protrusion 21 is arranged close to the second electrode terminal 17.

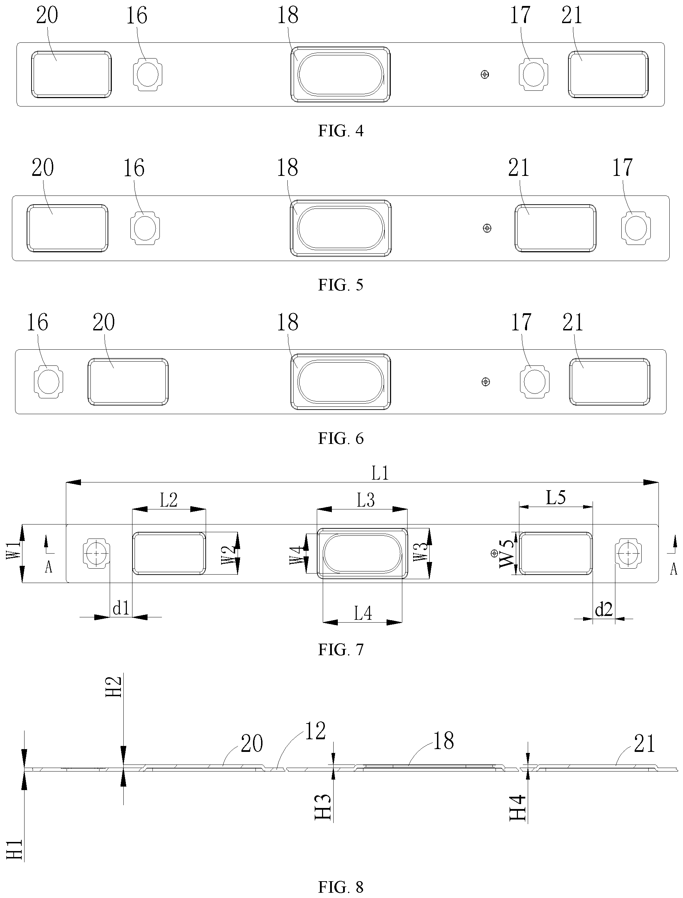

In some embodiments, as illustrated in FIG. 4, the second protrusion 20, the first electrode terminal 16, the first protrusion 18, the second electrode terminal 17, and the third protrusion 21 are arranged sequentially in the length direction of the cover plate 12.

In this way, one arrangement of the components on the cover plate 12 can be realized.

In some embodiments, the first electrode terminal 16, the first protrusion 18, and the second electrode terminal 17 are located between the second protrusion 20 and the third protrusion 21 in the length direction of the cover plate 12. The second protrusion 20 is arranged close to the first electrode terminal 16. The third protrusion 21 is arranged close to the second electrode terminal 17.

In some embodiments, as illustrated in FIG. 5, the second protrusion 20, the first electrode terminal 16, the first protrusion 18, the third protrusion 21, and the second electrode terminal 17 are arranged sequentially in the length direction of the cover plate 12.

In this way, one arrangement of the components on the cover plate 12 can be realized.

In some embodiments, the first electrode terminal 16, the first protrusion 18, and the third protrusion 21 are located between the second protrusion 20 and the second electrode terminal 17 in the length direction of the cover plate 12. The second protrusion 20 is arranged close to the first electrode terminal 16. The third protrusion 21 is arranged close to the second electrode terminal 17.

In some embodiments, as illustrated in FIG. 6, the first electrode terminal 16, the second protrusion 20, the first protrusion 18, the second electrode terminal 17, and the third protrusion 21 are arranged sequentially in the length direction of the cover plate 12.

In this way, one arrangement of the components on the cover plate 12 can be realized.

In some embodiments, the second protrusion 20, the first protrusion 18, and the second electrode terminal 17 are located between the first electrode terminal 16 and the third protrusion 21 in the length direction of the cover plate 12. The second protrusion 20 is arranged close to the first electrode terminal 16. The third protrusion 21 is arranged close to the second electrode terminal 17.

In some embodiments, as illustrated in FIG. 1 and FIG. 7, the second protrusion 20 is spaced apart from the first electrode terminal 16 by a predetermined distance. The third protrusion 21 is spaced apart from the second electrode terminal 17 by a predetermined distance.

In this way, a size of the cover plate 12 can be increased.

In some embodiments, as illustrated in FIG. 1, for the two electrode terminals, the first electrode terminal 16 on the left side may be a positive terminal, and the second electrode terminal 17 on the right side may be a negative terminal. In an embodiment, a distance d1 by which the first electrode terminal 16 is spaced apart from the second protrusion 20 is equal to a distance d2 by which the second electrode terminal 17 is spaced apart from the third protrusion 21, i.e., d1=d2. It should be understood that, in other embodiments, the distance d1 by which the first electrode terminal 16 is spaced apart from the second protrusion 20 may be unequal to the distance d2 by which the second electrode terminal 17 is spaced apart from the third protrusion 21.

Since the second protrusion 20 is spaced apart from the first electrode terminal 16 by the predetermined distance, and the third protrusion 21 is spaced apart from the second electrode terminal 17 by the predetermined distance, the size of the cover plate 12 can be increased compared with the second protrusion 20 being tightly attached to the first electrode terminal 16 and the third protrusion 21 being tightly attached to the second electrode terminal 17.

In some embodiments, as illustrated in FIG. 7, the end cover assembly 100 satisfies at least one of the following relationships:

$$0.05 \leq L2/L1 \leq 0.3;$$

$$0.05 \leq L5/L1 \leq 0.3;$$

$$0.1 \leq L3/L1 \leq 0.3;$$

and

$$0.5 \leq L4/L3 \leq 0.9 \text{ and } 5 \text{ mm} \leq L4\text{-}L3 \leq 20 \text{ mm};$$

where L1 represents a length of the cover plate 12, L2 represents a length of each of the at least one second protrusion 20, L3 represents a length of the first protrusion 18, L4 represents a length of the explosion-proof valve 14, L5 represents a length each of the at least one third protrusion 21, and each of a length direction of the first protrusion 18, a length direction of the second protrusion 20, and a length direction of the third protrusion 21 is parallel to the length direction of the cover plate 12.

In some embodiments, when the end cover assembly 100 satisfies $0.05 \leq L2/L1 \leq 0.3$, an effect of reinforcing the strength of the cover plate 12 and a reduced occupation of a space of other components such as the liquid injection hole 23 and the explosion-proof valve 14 can be ensured.

When L2/L1<0.05, the ratio is too small, which leads to a poor effect of reinforcing the strength of the cover plate 12. When L2/L1>0.3, the ratio is too large, which easily leads to an occupation of the space of other components such as the liquid injection hole 23 and the explosion-proof valve 14).

In some examples, L2/L1 may be 0.05, 0.07, 0.10, 0.12, 0.15, 0.18, 0.2, 0.22, 0.25, 0.28, 0.3, or any other value between 0.05 and 0.3.

When the end cover assembly 100 satisfies $0.05 \leq L5/L1 \leq 0.3$, the effect of reinforcing the strength of the cover plate 12 and the reduced occupation of the space of other components such as the liquid injection hole 23 and the explosion-proof valve 14 can be ensured.

When LS/L1<0.05, the ratio is too small, which leads to the poor effect of reinforcing the strength of the cover plate 12. When L5/L1>0.3, the ratio is too large, which easily leads to the occupation of the space of other components such as the liquid injection hole 23 and the explosion-proof valve 14.

In some examples, L5/L1 may be 0.05, 0.08, 0.10, 0.12, 0.16, 0.18, 0.21, 0.22, 0.24, 0.28, 0.3, or any other value between 0.05 and 0.3. Optionally, L2=L5.

When the end cover assembly 100 satisfies $0.1 \leq L3/L1 \leq 0.3$, an area of the explosion-proof valve 14 and the reduced occupation of the space of other components such as the liquid injection hole 23 can be ensured.

When L3/L1<0.1, the ratio is too small, which affects the area of the explosion-proof valve 14. When L3/L1>0.3, the ratio is too large, which easily leads to the occupation of the space of other components such as the liquid injection hole 23.

In some examples, L3/L1 may be 0.1, 0.12, 0.15, 0.18, 0.2, 0.22, 0.25, 0.28, 0.3, or any other value between 0.1 and 0.3.

When the end cover assembly 100 satisfies 0.5≤L4/L3≤0.9 and 5 mm≤L4-L3≤20 mm, an effect of reinforcing strength at the explosion-proof valve 14 and a welding quality of the explosion-proof valve 14 can be ensured.

When L4/L3<0.5 and L4-L3<5 mm, a difference between L4 and L3 is too small, which easily affects the welding quality of the explosion-proof valve 14. When L4/L3>0.9 and L4-L3>20 mm, the difference between L4 and L3 is too large, which leads to a poor effect of reinforcing the strength at the explosion-proof valve 14.

In some examples, L4/L3 may be 0.5, 0.55, 0.6, 0.65, 0.7, 0.75, 0.8, 0.85, 0.9, or any other value between 0.5 and 0.9.

In some examples, L4-L3 may be 5 mm, 6 mm, 7 mm, 9 mm, 10 mm, 11 mm, 13 mm, 16 mm, 18 mm, 20 mm, or any other value between 5 mm and 20 mm.

In an embodiment, the end cover assembly 100 satisfies the following four relationships:

$$0.05 \leq L2/L1 \leq 0.3;$$

$$0.05 \leq L5/L1 \leq 0.3;$$

$$0.1 \leq L3/L1 \leq 0.3;$$

and

$$0.5 \leq L4/L3 \leq 0.9 \text{ and } 5 \text{ mm} \leq L4\text{-}L3 \leq 20 \text{ mm}.$$

In an embodiment, the end cover assembly 100 satisfies one or two of the following four relationships:

$$0.05 \leq L2/L1 \leq 0.3;$$

$$0.05 \leq L5/L1 \leq 0.3;$$

$$0.1 \leq L3/L1 \leq 0.3;$$

and

$$0.5 \leq L4/L3 \leq 0.9 \text{ and } 5 \text{ mm} \leq L4\text{-}L3 \leq 20 \text{ mm}.$$

In some embodiments, as illustrated in FIG. 7, the end cover assembly 100 satisfies at least one of the following relationships:

$$0.2 \leq W2/W1 \leq 0.9;$$

$$0.2 \leq W5/W1 \leq 0.9;$$

$$0.4 \leq W3/W1 \leq 0.9;$$

and

$$0.5 \leq W4/W3 \leq 0.9 \text{ and } 5 \text{ mm} \leq W3\text{-}W4 \leq 20 \text{ mm},$$

where W 1 represents a width of the cover plate 12, W2 represents a width of each of the at least one second protrusion 20, W3 represents a width of the first protrusion 18, W4 represents a width of the explosion-proof valve 14, W5 represents a width each of the at least one third protrusion 21, and each of a width direction of the first protrusion 18, a width direction of the second protrusion 20, and a width direction of the third protrusion 21 is parallel to a width direction of the cover plate 12.

In some embodiments, when the end cover assembly 100 satisfies $0.2 \leq W2/W1 \leq 0.9$, the effect of reinforcing the strength of the cover plate 12 and the welding quality of the cover plate 12 can be ensured.

When W2/W1<0.2, the ratio is too small, which leads to the poor effect of reinforcing the strength of the cover plate 12. When W2/W1>0.9, the ratio is too large, which easily affects the welding quality of the cover plate 12. In some embodiments, when the ratio of W2 to W1 approaches 1, the second protrusion 20 would gradually extend to edges of the cover plate 12 in the width direction of the cover plate 12. For laser welding of the cover plate 12 and a housing 42, a region for pre-spot welding needs to be reserved on each of the two side edges of the cover plate 12 in the width direction of the cover plate 12 before formal laser welding. When the second protrusion 20 extends to the edges of the cover plate 12 in the width direction of the cover plate 12, a path design of the pre-spot welding for the cover plate 12 will be affected, hindering the laser welding between the cover plate 12 and the housing 42.

In some examples, W2/W1 may be 0.2, 0.25, 0.3, 0.35, 0.4, 0.45, 0.5, 0.55, 0.6, 0.65, 0.7, 0.75, 0.8, 0.85, 0.9, or any other value between 0.2 and 0.9.

When the end cover assembly 100 satisfies, the effect of reinforcing the strength of the cover plate 12 and the welding quality of the cover plate 12 can be ensured.

When WS/W1<0.2, the ratio is too small, which leads to the poor effect of reinforcing the strength of the cover plate 12. When W2/W1>0.9, the ratio is too large, which easily affects the welding quality of the cover plate 12. In some embodiments, when the ratio of W5 to W1 approaches 1, the third protrusion 21 would gradually extend to the edges of the cover plate 12 in the width direction of the cover plate 12. For the laser welding of the cover plate 12 and the housing 42, the region for pre-spot welding needs to be reserved on each of the two side edges of the cover plate 12 in the width direction of the cover plate 12 before the formal laser welding. When the third protrusion 21 extends to the edges of the cover plate 12 in the width direction of the cover plate 12, the path design of the pre-spot welding for the cover plate 12 will be affected, hindering the laser welding between the cover plate 12 and the housing 42.

In some examples, W5/W1 may be 0.2, 0.23, 0.31, 0.35, 0.4, 0.42, 0.51, 0.55, 0.61, 0.67, 0.7, 0.75, 0.8, 0.85, 0.9, or any other value between 0.2 and 0.9. Optionally, W2=W5.

When the end cover assembly 100 satisfies $0.4 \leq W3/W1 \leq 0.9$, the area of the explosion-proof valve 14 and the welding quality of the cover plate 12 can be ensured.

When W3/W1<0.4, the ratio is too small, which affects the area of the explosion-proof valve 14. When W3/W1>0.9, the ratio is too large, which easily affects the welding quality of the cover plate 12. In some embodiments, when the ratio of W3 to W1 approaches 1, the first protrusion 18 would gradually extend to the edges of the cover plate 12 in the width direction of the cover plate 12. For the laser welding of the cover plate 12 and the housing 42, the region for pre-spot welding needs to be reserved on each of the two side edges of the cover plate 12 in the width direction of the cover plate 12 before the formal laser welding. When the first protrusion 18 extends to the edges of the cover plate 12 in the width direction of the cover plate 12, the path design of the pre-spot welding for the cover plate 12 will be affected, hindering the laser welding between the cover plate 12 and the housing 42.

In some examples, W3/W1 may be 0.4, 0.45, 0.5, 0.55, 0.6, 0.65, 0.7, 0.75, 0.8, 0.85, 0.9, or any other value between 0.4 and 0.9.

When the end cover assembly 100 satisfies the relationship: $0.5 \leq W4/W3 \leq 0.9$ and $5 \text{ mm} \leq W3-W4 \leq 20 \text{ mm}$, the effect of reinforcing the strength at the explosion-proof valve 14 and the welding quality of the explosion-proof valve 14 can be ensured.

When W4/W3<0.5 and W3-W4<5 mm, a difference between W4 and W3 is too small, which easily affects the welding quality of the explosion-proof valve 14. When W4/W3>0.9 and W3-W4>20 mm, the difference between W4 and W3 is too large, which leads to a poor effect of reinforcing the strength of the explosion-proof valve 14.

In some examples, W4/W3 may be 0.5, 0.55, 0.6, 0.65, 0.7, 0.75, 0.8, 0.85, 0.9, or any other value between 0.5 and 0.9.

In some examples, W3-W4 may be 5 mm, 6 mm, 7 mm, 9 mm, 10 mm, 11 mm, 13 mm, 16 mm, 18 mm, 20 mm, or any other value between 5 mm and 20 mm.

In an embodiment, the end cover assembly 100 satisfies the following four relationships:

$$0.2 \leq W2/W1 \leq 0.9;$$

$$0.2 \leq W5/W1 \leq 0.9;$$

$$0.4{\leq}W3/W1{\leq}0.9;$$

and

$$0.5{\leq}W4/W3{\leq}0.9 \text{ and } 5mm{\leq}W3\text{-}W4{\leq}20 \text{ mm.}$$

In an embodiment, the end cover assembly 100 satisfies one or any two of the following four relationships:

$$0.2{\leq}W2/W1{\leq}0.9;$$

$$0.2{\leq}W5/W1{\leq}0.9;$$

$$0.4{\leq}W3/W1{\leq}0.9;$$

and

$$0.5{\leq}W4/W3{\leq}0.9 \text{ and } 5 \text{ mm}{\leq}W3\text{-}W4{\leq}20 \text{ mm.}$$

In some embodiments, as illustrated in FIG. 8, the end cover assembly 100 satisfies at least one of the following relationships:

$$0.2{\leq}H2/H1{\leq}1 \text{ and } 0.5 \text{ mm}{\leq}H2{\leq}3 \text{ mm;}$$

$$0.2{\leq}H3/H1{\leq}1 \text{ and } 0.5 \text{ mm}{\leq}H3{\leq}3 \text{ mm;}$$

and

$$0.2{\leq}H4/H1{\leq}1 \text{ and } 0.5 \text{ mm}{\leq}H4{\leq}3 \text{ mm,}$$

where H1 represents a thickness of the cover plate 12, H2 represents a height by which each of the at least one second protrusion 20 protrudes from the cover plate 12, H3 represents a height by which the first protrusion 18 protrudes from the cover plate 12, and H4 represents a height by which each of the at least one third protrusion 21 protrudes from the cover plate 12.

In some embodiments, when the end cover assembly 100 satisfies $0.2{\leq}H2/H1{\leq}1$ and $0.5$ mm${\leq}H2{\leq}3$ mm, the effect of reinforcing the strength of the cover plate 12 and a reduced occupation of a module space can be ensured.

When H2/H1<0.2 and H2<0.5 mm, H2 is too small, which leads to the poor effect of reinforcing the strength of the cover plate 12. When H2/H1>1 and H2>3 mm, H2 is too large, which leads to a high molding difficulty and easily results in an occupation of the module space. In some embodiments, after the connection sheet 38 is welded to the first electrode terminal 16, a total thickness of the first electrode terminal 16 and a connection sheet 38 is smaller than a height of the second protrusion 20. It should be considered that the height of the second protrusion 20, which has a function of enhancing a stress intensity of the cover plate 12, cannot be too large when the stress intensity can be increased with the height of the second protrusion 20 by a predetermined amount. This is because once the height of the second protrusion 20 is greater than the total thickness of the first electrode terminal 16 and the connection sheet 38, the second protrusion 20 will hinder later modulization of the battery cell 200 in a height direction.

In some examples, H2/H1 may be 0.2, 0.25, 0.3, 0.35, 0.4, 0.45, 0.5, 0.55, 0.6, 0.65, 0.7, 0.75, 0.8, 0.85, 0.9, 0.95, 1, or any other value between 0.2 and 1.

In some examples, H2 may be 0.5 mm, 1 mm, 1.5 mm, 2 mm, 2.5 mm, 3 mm, or any other value between 0.5 mm and 3 mm.

When the end cover assembly 100 satisfies $0.2{\leq}H4/H1{\leq}1$ and $0.5$ mm${\leq}H4{\leq}3$ mm, the effect of reinforcing the strength of the cover plate 12 and the reduced occupation of the module space can be ensured.

When H4/H1<0.2 and H4<0.5 mm, H4 is too small, which leads to the poor effect of reinforcing the strength of the cover plate 12. When H4/H1>1 and H4>3 mm, H4 is too large, which leads to the high molding difficulty and easily results in the occupation of the module space. In some embodiments, after the connection sheet 38 is welded to the second electrode terminal 17, a total thickness of the second electrode terminal 17 and the connection sheet 38 is smaller than a height of the third protrusion 21. It should be considered that the height of the third protrusion 21, which has a function of enhancing the stress intensity of the cover plate 12, cannot be too large when the stress intensity can be increased with the height of the third protrusion 21. This is because once the height of the third protrusion 21 is greater than the total thickness of the second electrode terminal 17 and the connection sheet 38, the third protrusion 21 will hinder the later modulization of the battery cell 200 in the height direction.

In some examples, H4/H1 may be 0.2, 0.24, 0.32, 0.35, 0.4, 0.46, 0.5, 0.55, 0.6, 0.65, 0.7, 0.75, 0.8, 0.85, 0.91, 0.95, 1, or any other value between 0.2 and 1.

In some examples, H4 may be 0.5 mm, 1 mm, 1.5 mm, 2 mm, 2.5 mm, 3 mm, or any other value between 0.5 mm and 3 mm. Optionally, H2=H4.

When the end cover assembly 100 satisfies $0.2 \leq H3/H1 \leq 1$ and 0.5 mm $\leq H3 \leq 3$ mm, the effect of reinforcing the strength of the cover plate 12 and the reduced occupation of the module space can be ensured.

When H3/H1<0.2 and H3<0.5mm, H3 is too small, which leads to the poor effect of reinforcing the strength of the cover plate 12. When H3/H1>1 and H3>3 mm, H3 is too large, which leads to the high molding difficulty and easily results in the occupation of the module space.

In some examples, H3/H1 may be 0.2, 0.25, 0.3, 0.35, 0.4, 0.45, 0.5, 0.55, 0.6, 0.65, 0.7, 0.75, 0.8, 0.85, 0.9, 0.95, 1, or any other value between 0.2 and 1.

In some examples, H3 may be 0.5 mm, 1 mm, 1.5 mm, 2 mm, 2.5 mm, 3 mm, or any other value between 0.5 mm and 3 mm. H3 may be equal or unequal to H2.

As described below, the end cover assembly 100 of the present disclosure can provide at least the following effects.

1) The protrusion functions similarly to the reinforcing rib, which significantly reinforces the strength of the cover plate 12. The protrusion is formed through the stamping process without increasing the thickness of the cover plate 12, which can reduce the costs and increase the energy density.

2) A problem of a reduction of the strength of the cover plate 12 caused by the large mounting hole 22 of the explosion-proof valve 14 can be alleviated.

3) A connection platform is provided for sampling of the battery cell 200, which can reduce cost of a module side.

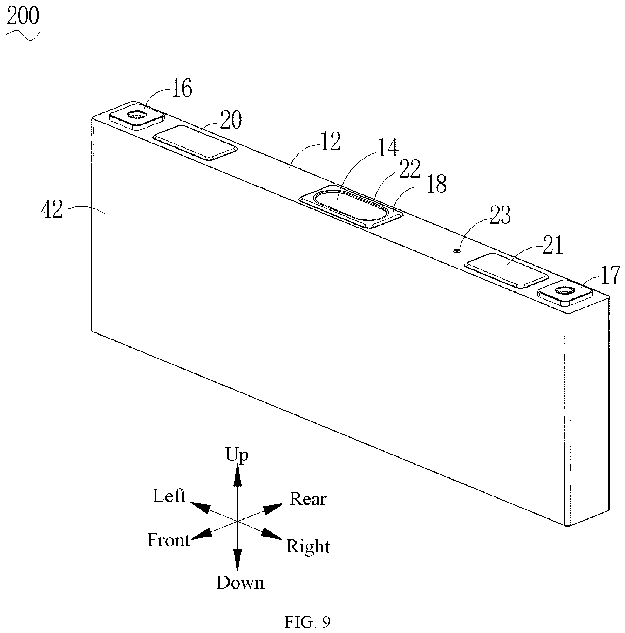

As illustrated in FIG. 9, according to an embodiment of the present disclosure, a battery cell 200 includes the end cover assembly 100 according to any of the above-mentioned embodiments.

With the above-mentioned battery cell 200, the first protrusion 18 and the at least one second protrusion 20 are arranged on the cover plate 12. The at least one second protrusion 20 is arranged at each of the two opposite sides of the first protrusion 18 in the length direction of the cover plate 12. The protrusion can significantly reinforce the strength of the cover plate 12 without increasing the thickness of the cover plate 12, which can reduce the cost and increase the energy density.

In some embodiments, the battery cell 200 further includes a housing 42 and the bare cell 44. The housing 42 has an accommodation chamber 46 formed in the housing 42. The housing 42 has an opening 48 defined on a side of the housing 42. The end cover assembly 100 is mounted at the opening 48 to seal the accommodation chamber 46. The connection plate 34 of the end cover assembly 100 is electrically connected to a tab of the bare cell 44.

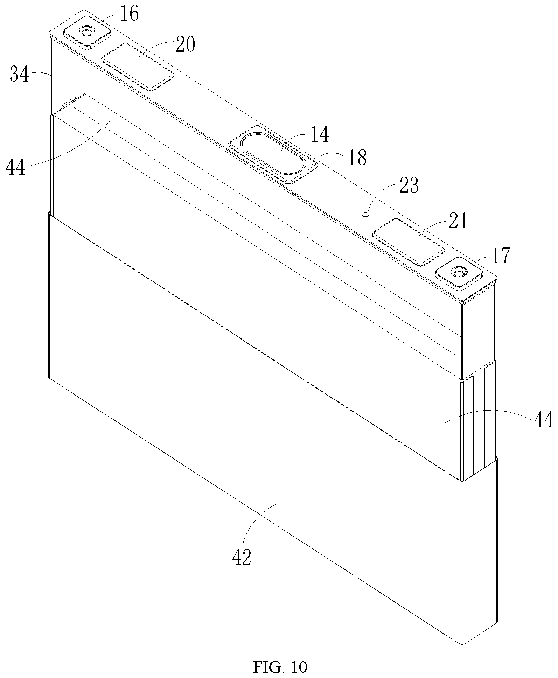

At least one bare cell 44 may be arranged in the accommodation chamber 46. As illustrated in FIG. 10, two bare cells 44 are arranged in the accommodation cavity 46. The two bare cells 44 are connected in series or in parallel.

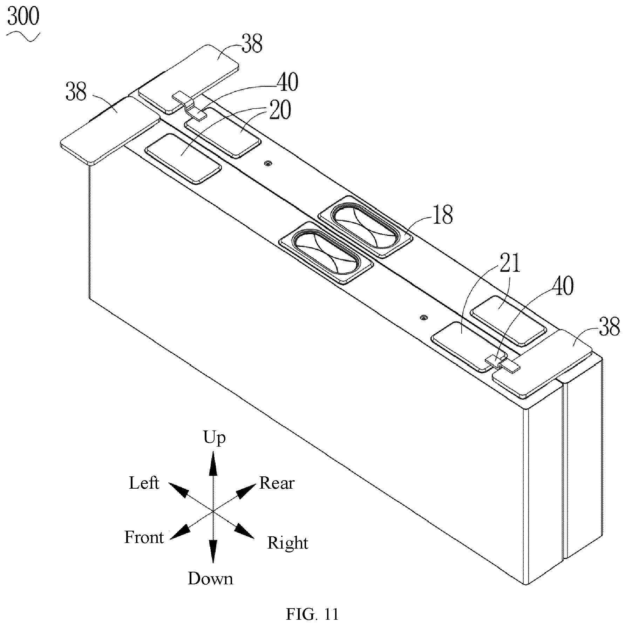

As illustrated in FIG. 11, according to an embodiment of the present disclosure, a battery module 300 includes the battery cell 200 according to the above-mentioned embodiments.

With the above-mentioned battery module 300, the first protrusion 18, the at least one second protrusion 20, and the at least one third protrusion 21 are arranged on the cover plate 12. The at least one second protrusion 20 and the at least one third protrusion 21 are arranged at the two opposite sides of the first protrusion 18 in the length direction of the cover plate 12, respectively. The protrusions can significantly reinforce the strength of the cover plate 12 without increasing the thickness of the entire cover plate 12, which can reduce the cost and increase the energy density.

In some embodiments, the battery module 300 may include one battery cell 200 or a plurality of battery cells 200. The plurality of battery cells 200 may be electrically connected in series, in parallel, or in series and parallel. The battery module 300 further includes a casing. The battery cell 200 may be placed in the casing.

In some embodiments, the battery module 300 includes a plurality of battery cells 200 arranged side by side. Two first electrode terminals 16 or two second electrode terminals 17 of two adjacent battery cells 200 of the plurality of battery cells 200 are electrically connected to each other by a connection sheet 38. One of the at least one second protrusion 20 or one of the at least one third protrusion 21 of each of the plurality of battery cells 200 is electrically connected to a connection sheet 38 close to the one second protrusion or the one third protrusion by a sampling connector 40.

In this way, the second protrusion 20 or the third protrusion 21 can be used as a sampling protrusion to reduce the costs.

In some embodiments, when the battery cell 200 has a large size, the end cover assembly 100 spans by a large distance. By using one second protrusion 20 or one third protrusion 21 as the sampling protrusion, it is possible to reduce use of sampling wires, thereby reducing the costs.

As illustrated in FIG. 11, two battery cells 200 are connected in series by the connection sheet 38 (such as an aluminum bar sheet). The third protrusion 21 of the front battery cell 200 of the two battery cells 200 serves as the sampling protrusion and is electrically connected to the connection sheet 38 by the sampling connector 40. The second protrusion 20 of the rear battery cell 200 of the two battery cells 200 serves as the sampling protrusion and is electrically connected to the connection sheet 38 by the sampling connector 40.

The first electrode terminal 16 of the front battery cell 200 at a left side is a negative terminal. The second electrode terminal 17 of the front battery cell 200 at a right side is a positive terminal. The first electrode terminal 16 of the rear battery cell 200 at the left side is a positive terminal. The second electrode terminal 17 of the rear battery cell 200 at the right side is a negative terminal. In the rear battery cell 200, the second protrusion 20 close to the positive electrode is electrically connected to the connection sheet 38 by the sampling connector 40, in such a manner that the housing 42 of the battery cell 200 is charged. Data such as a voltage of the battery can be obtained through the connection sheet 38 connected to the negative electrode and the housing 42.

In some embodiments, when more than two battery cells 200 are provided, these battery cells are connected in series by the connection sheets 38. The second protrusion 20 close to one overall positive electrode in the battery module is connected to the connection sheet 38 by the sampling connector 40 to charge the housing 42 of a corresponding one of the battery cells 200. The third protrusion 21 close to one overall negative electrode in the battery module is connected to the connection sheet 38 by the sampling connector 40. Therefore, it is unnecessary to design a long collection harness for a voltage signal collection, thereby reducing the costs.

According to an embodiment of the present disclosure, an energy storage device includes the battery cell 200 according to any of the above-mentioned embodiments or the battery module 300 according to any of the above-mentioned embodiments.

With the above-mentioned energy storage device, the first protrusion 18, the at least one second protrusion 20, and the at least one third protrusion 21 are arranged on the cover plate 12. The at least one second protrusion 20 and the at least one third protrusion 21 are arranged at the two opposite sides of the first protrusion 18 in the length direction of the cover plate 12, respectively. The protrusions can significantly reinforce the strength of the cover plate 12 without increasing the thickness of the entire cover plate 12, which can reduce the costs and increase the energy density.

In some embodiments, the energy storage device may further include a cluster rack and a shell. In an embodiment, the energy storage device includes one or more battery modules 300. The one or more battery modules 300 may be mounted on the cluster rack to form a battery cluster. The plurality of battery modules 300 may be arranged on the cluster rack in array and may be electrically connected in series, in parallel, or in series and parallel. One or more battery clusters may be placed in the shell.

In an embodiment, the energy storage device includes one or more battery cells 200. The one or more battery cells 200 may be mounted on the cluster rack to form a battery cluster. The plurality of battery cells 200 may be arranged on the cluster rack in array and may be electrically connected in series, in parallel, or in series and parallel. One or more battery clusters may be placed in the shell.

The energy storage device may include, but is not limited to, an energy storage container, a household energy storage cabinet, and other energy storage devices.

In the description of this specification, descriptions with reference to the terms "an embodiment", "some embodiments", "illustrative embodiments", "examples", "specific examples", or "some examples" etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics may be combined in any one or more embodiments or examples in a suitable manner.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

**Claims**

1. An end cover assembly (100), comprising:

   a cover plate (12) having a first protrusion (18), at least one second protrusion (20), and at least one third protrusion (21), the first protrusion (18) having a mounting hole (22), and the at least one second protrusion (20) and the at least one third protrusion (21) being arranged at two opposite sides of the first protrusion (18) in a length direction of the cover plate (12), respectively;
   an explosion-proof valve (14) mounted in the mounting hole (22); and
   a first electrode terminal (16) and a second electrode terminal (17) that are arranged on the cover plate (12) and spaced apart from each other, wherein in the length direction of the cover plate (12), one of the at least one second protrusion (20) is closer to the first electrode terminal (16) than the first protrusion (18) and one of the at least one third protrusion (21) is closer to the second electrode terminal (17) than the first protrusion (18).

2. The end cover assembly (100) according to claim 1, wherein the first protrusion (18), the at least one second protrusion (20), and the at least one third protrusion (21) are formed on the cover plate (12) through a stamping process.

3. The end cover assembly (100) according to claim 1, wherein:

   the first electrode terminal (16), the at least one second protrusion (20), the first protrusion (18), the at least one third protrusion (21), and the second electrode terminal (17) are arranged sequentially in the length direction of the cover plate (12); or
   the at least one second protrusion (20), the first electrode terminal (16), the first protrusion (18), the second electrode terminal (17), and the at least one third protrusion (21) are arranged sequentially in the length direction of the cover plate (12); or
   the at least one second protrusion (20), the first electrode terminal (16), the first protrusion (18), the at least one third protrusion (21), and the second electrode terminal (17) are arranged sequentially in the length direction of the cover plate (12); or
   the first electrode terminal (16), the at least one second protrusion (20), the first protrusion (18), the second electrode terminal (17), and the at least one third protrusion (21) are arranged sequentially in the length direction of the cover plate (12).

4. The end cover assembly (100) according to claim 1, wherein:

   the at least one second protrusion (20) is spaced apart from the first electrode terminal (16); and
   the at least one third protrusion (21) is spaced apart from the second electrode terminal (17).

5. The end cover assembly (100) according to claim 1, satisfying at least one of the following relationships:

$$0.05 \leq L2/L1 \leq 0.3;$$

$$0.05 \leq L5/L1 \leq 0.3;$$

$$0.1 \leq L3/L1 \leq 0.3;$$

and

$$0.5 \leq L4/L3 \leq 0.9 \text{ and } 5 \text{ mm} \leq L4\text{-}L3 \leq 20 \text{ mm},$$

where L1 represents a length of the cover plate (12), L2 represents a length of each of the at least one second protrusion (20), L3 represents a length of the first protrusion (18), L4 represents a length of the explosion-proof valve (14), L5 represents a length of each of the at least one third protrusion (21), and each of a length direction of the first protrusion (18), a length direction of the second protrusion (20), and a length direction of the third protrusion

(21) is parallel to the length direction of the cover plate (12).

6. The end cover assembly (100) according to claim 1, satisfying at least one of the following relationships:

$$0.2 \leq W2/W1 \leq 0.9;$$

$$0.2 \leq W5/W1 \leq 0.9;$$

$$0.4 \leq W3/W1 \leq 0.9;$$

and

$$0.5 \leq W4/W3 \leq 0.9 \text{ and } 5 \text{ mm} \leq W3\text{-}W4 \leq 20 \text{ mm},$$

where W1 represents a width of the cover plate (12), W2 represents a width of each of the at least one second protrusion (20), W3 represents a width of the first protrusion (18), W4 represents a width of the explosion-proof valve (14), W5 represents a width of each of the at least one third protrusion (21), and each of a width direction of the first protrusion (18), a width direction of the second protrusion (20), and a width direction of the third protrusion (21) is parallel to a width direction of the cover plate (12).

7. The end cover assembly (100) according to claim 1, satisfying at least one of the following relationships:

$$0.2 \leq H2/H1 \leq 1 \text{ and } 0.5 \text{ mm} \leq H2 \leq 3 \text{ mm};$$

$$0.2 \leq H3/H1 \leq 1 \text{ and } 0.5 \text{ mm} \leq H3 \leq 3 \text{ mm};$$

and

$$0.2 \leq H4/H1 \leq 1 \text{ and } 0.5 \text{ mm} \leq H4 \leq 3 \text{ mm},$$

where H1 represents a thickness of the cover plate (12), H2 represents a height by which each of the at least one second protrusion (20) protrudes from the cover plate (12), H3 represents a height by which the first protrusion (18) protrudes from the cover plate (12), and H4 represents a height by which each of the at least one third protrusion (21) protrudes from the cover plate (12).

8. A battery cell (200), comprising the end cover assembly (100) according to any one of claims 1 to 7.

9. A battery module (300), comprising the battery cell (200) according to claim 8.

10. The battery module (300) according to claim 9, comprising a plurality of battery cells (200) arranged side by side, wherein two first electrode terminals (16) or two second electrode terminals (17) of two adjacent battery cells (200) of the plurality of battery cells (200) are electrically connected to each other by a connection sheet (38), and wherein one of the at least one second protrusion (20) or one of the at least one third protrusion (21) of each of the plurality of battery cells (200) is electrically connected to a connection sheet (38) close to the one second protrusion (20) or the one third protrusion (21) by a sampling connector (40).

11. An energy storage device, comprising the battery cell (200) according to claim 8 or the battery module (300) according to claim 9 or 10.

FIG. 1

FIG. 2

FIG. 3

FIG. 4

FIG. 5

FIG. 6

FIG. 7

FIG. 8

FIG. 9

FIG. 10

FIG. 11

Europäisches
Patentamt
European
Patent Office
Office européen
des brevets

## EUROPEAN SEARCH REPORT

Application Number

EP 24 16 2233

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 206 727 177 U (NINGDE CONTEMPORARY AMPEREX TECH CO LTD) 8 December 2017 (2017-12-08) * paragraphs [0016], [0017], [0025], [0026], [0028], [0063], [0070], [0072], [0089], [0104]; figure 4 * | 1-11 | INV. H01M50/103 H01M50/15 H01M50/176 |
| X | EP 3 471 166 A1 (CONTEMPORARY AMPEREX TECHNOLOGY CO LTD [CN]) 17 April 2019 (2019-04-17) | 1,3-11 | |
| A | * figures 1,3 * * paragraphs [0047] - [0009], [0012] - [0014], [0024], [0036], [0037], [0049], [0051], [0053] * | 2 | |
| X | CN 214 898 622 U (CHINA LITHIUM BATTERY XIAMEN TECH CO LTD) 26 November 2021 (2021-11-26) * paragraphs [0040] - [0043]; figures 1,2 * | 1-11 | |

TECHNICAL FIELDS
SEARCHED (IPC)

H01M

The present search report has been drawn up for all claims

| Place of search | Date of completion of the search | Examiner |
|---|---|---|
| Munich | 23 August 2024 | Möller, Claudia |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
......................................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 16 2233

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2024

| Patent document cited in search report | | Publication date | Patent family member(s) | | Publication date |
|---|---|---|---|---|---|
| CN 206727177 | U | 08-12-2017 | NONE | | |
| EP 3471166 | A1 | 17-04-2019 | CN | 109659454 A | 19-04-2019 |
| | | | EP | 3471166 A1 | 17-04-2019 |
| | | | US | 2019109302 A1 | 11-04-2019 |
| CN 214898622 | U | 26-11-2021 | NONE | | |

EPO FORM P0459

For more details about this annex : see Official Journal of the European Patent Office, No. 12/82